Europäisches Patentamt

European Patent Office

Office européen des brevets

(19)

(11) Veröffentlichungsnummer : **0 377 398 B1**

(12) **EUROPÄISCHE PATENTSCHRIFT**

(45) Veröffentlichungstag der Patentschrift :
**01.04.92 Patentblatt 92/14**

(51) Int. Cl.⁵ : **B65G 61/00, B65H 31/30**

(21) Anmeldenummer : **89730221.2**

(22) Anmeldetag : **20.12.89**

(54) **Palettierroboter.**

(30) Priorität : **31.12.88 DE 3844502**

(43) Veröffentlichungstag der Anmeldung :
**11.07.90 Patentblatt 90/28**

(45) Bekanntmachung des Hinweises auf die
Patenterteilung :
**01.04.92 Patentblatt 92/14**

(84) Benannte Vertragsstaaten :
**AT BE CH DE ES FR GB GR IT LI NL SE**

(56) Entgegenhaltungen :
**EP-A- 0 217 450**

(56) Entgegenhaltungen :
**DE-A- 3 333 301**
**DE-A- 3 517 955**
**US-A- 3 770 143**
**US-A- 4 692 876**

(73) Patentinhaber : **SYSTEM GMBH**
**Monschauer Strasse 1**
**W-4000 Düsseldorf 11 (DE)**

(72) Erfinder : **Tübke, Axel B., Dipl.-Kfm.Dr.**
**Bayernallee 19**
**W-1000 Berlin 19 (DE)**

(74) Vertreter : **Christiansen, Henning, Dipl.-Ing.**
**Patentanwalt Pacelliallee 43/45**
**W-1000 Berlin 33 (DE)**

**Beschreibung**

Die Erfindung betrifft einen Palettierroboter der im Oberbegriff des Anspruchs 1 angegebenen Art.

Ein derartiger Palettierroboter zum Abheben eines Materialstapels von einer Unterlage, insbesondere eines Stapels von Zuschnitten von einer Zwischen- oder Unterlage in der Tabakindustrie, ist aus der DE 37 18 601 A1 bekannt. Der Palettierroboter weist dabei eine horizontal gerichtete Traverse mit einer Fahrbahn auf, an der über ein Zwischenelement ein um eine vertikal gerichtete Achse drehbarer Arm mit einer ebenfalls um eine derartige Achse drehbar angetriebenen Greifvorrichtung angeordnet ist. Ein Lagermittel trägt das Zwischenelement mit dem Arm und der Greifvorrichtung. Dadurch wird zum einen eine Führung entlang der Traverse und zum anderen ein Drehen des Arms unterhalb der Traverse gewährleistet. Dabei sind das Lagermittel und der horizontal gerichtete Arm über das Zwischenelement verbunden, wobei diese jeweils an den Verbindungsstellen mit dem Zwischenelement um horizontal gerichtete Achsen beweglich gelagert sind. Der Greifer ist dabei über eine Translations- und drei Rotationsachsen bewegbar.

Der bekannte Palettierroboter hat den Nachteil, daß die Greifvorrichtung beim Palettiervorgang über vier Achsen (nach den für Robotersysteme geltenden Definitionen) bewegt wird. Dafür sind ein hoher Steuerungs- und Konstruktionsaufwand sowie ein komplizierter Antrieb erforderlich. Die Arbeitsgeschwindigkeit des Roboters ist weiterhin sehr gering und deshalb sind die Umschlagzeiten an den Palettierstationen entsprechend hoch. Zwar kann der Palettierroboter die ansteigende Höhe der Ablagefläche beim stapelnden Palettiervorgang ausgleichen, aber durch die dafür vorgesehene Kinematik ist dieser sehr langsam. Ein Ausgleich dieses Nachteils ist nach dem Stand der Technik nur durch kostenintensive Maßnahmen wie durch Anordnen einer zusätzlichen Palettierstation oder durch Einbau von Stauflächen für das zu palettierende Gut in die Bearbeitungs- bzw. Transportlinie möglich. Desweiteren ist der Palettierroboter gewichtsintensiv ausgebildet und wird dadurch an den Gelenken beim Palettieren stark beansprucht. Dies führt bei einer anzustrebenden hohen Arbeitsgeschwindigkeit in gleichem Maße zu einer Steigerung der Störanfälligkeit des Palettierroboters. Hohe Wartungskosten müssen deshalb bei dem bekannten Palettierroboter in Kauf genommen werden.

Weiterhin ist in der DD 22 62 67 A1 eine Vorrichtung zum handgeführten Versetzen von stapelbaren Gegenständen beschrieben. An einer horizontalen Traverse ist hierbei über ein Lagermittel ein in horizontaler Richtung ausfahrbarer und um eine vertikal gerichtete Achse drehbarer Arm angelenkt. Dabei ist das Lagermittel entlang der Traverse in horizontaler Richtung verfahrbar ausgebildet. An dem freien Ende des drehbar gelagerten Arms ist weiterhin ein in vertikaler Richtung nach unten ausfahrbares Hubelement vorgesehen, an dessen Ende eine Greifvorrichtung um eine vertikal gerichtete Achse drehbar gelagert ist. Die Greifvorrichtung ist im Ganzen also über drei Translations- und zwei Rotationsachsen manuell bewegbar.

Die Vorrichtung zum handgeführten Versetzen von stapelbaren Packen hat den Nachteil, daß diese für ein automatisches Palettieren nicht geeignet ist. Dabei ist ein manuelles Versetzen der Stapel mit dieser Vorrichtung zum einen zu langsam und zum anderen zu personalkostenintensiv. Selbst wenn ein Umrüsten mit dieser Konstruktion auf ein automatisches Verfahren möglich wäre, würden die Nachteile für den oben erwähnten Palettierroboter auch hier zum Tragen kommen, wie ein zu großes Gewicht der bewegten Teile bzw. eine zu aufwendige Kinematik.

Der Erfindung liegt die Aufgabe zugrunde, bei einem Palettierroboter der eingangs genannten Gattung unter Beseitigung der genannten Nachteile eine Konstruktion zu schaffen, die bei vereinfachter Konstruktion eine schnellere Arbeitsweise ermöglicht.

Diese Aufgabe wird mit den kennzeichnenden Merkmalen des Anspruchs 1 gelöst.

Der Erfindung liegt die Erkenntnis zugrunde, daß bei der Palettierung oder Depalettierung von stapelbaren Gegenständen durch eine Konstruktion mit möglichst wenigen im Palettierroboter wirkenden Gelenken die Palettierungsgeschwindigkeit unter Wahrung eines großen Zugriffsbereichs des Roboters wesentlich erhöht werden kann.

Gelenke erfordern präzise Antriebe und positionsgenaue Arretierstellungen. Bei der erfindungsgemäßen Lösung ist bewußt auf Gelenke verzichtet worden, die eine Abknickung des Arms ermöglichen. Dieser ist statt dessen starr ausgebildet und besteht bevorzugt aus einem kastenförmigen Alumiumprofil.

Die um eine vertikale Achse rotierende einzige Drehlagerung des starren Arms ermöglicht zusammen mit der horizontalen Verschiebbarkeit des drehgelagerten Endes ein schnelles und präzises Bewegen der Greifvorrichtung in einem großen Arbeitsbereich. Zum Ausgleich der unterschiedlichen, durch Verwerfungen oder Toleranzen der Stapelhöhen entstehenden Ablage- bzw. Aufnahmeflächen beim Palettieren bzw. Depalettieren, ist die Greifvorrichtung um einen vertikalen Hub von wenigen Zentimetern verschieblich ausgebildet. Dieser Hub ist durch eine einfache vertikale Hilfsführung der Greifvorrichtung im Greifarm realisiert, wobei diese hierbei, insbesondere um einen festen Betrag, verschieblich gelagert ist. Die vertikale Ausgleichsbewegung der Greifvorrichtung beeinträchtigt, aufgrund des geringen Bewegungsumfangs, die durch die Ausbildung des Roboters mit wenigen Gelenken erreichte hohe Palettierungsgeschwindigkeit nicht. Die Palettierung bzw.

Depalettierung erfolgt im übrigen jeweils innerhalb jeweils derselben Stapelebene, wobeinach dem jeweiligen Be- bzw. Entladen ein Anheben oder Absenken der Palette um jeweils eine Stapellage erfolgt.

Der Stellbereich für Fördervorrichtungen bzw. -mittel bleibt weiterhin in vorteilhafter Weise durch die Traversenkonstruktion gewahrt. Bei Transportvorgängen im Zusammenhang mit Paletten muß nämlich sowohl der Stellbereich der Palette selbst als auch ein Zufuhr- oder Abfuhrbereich für das Stapelgut bzw. entsprechende Vorrichtungen bedient werden können. Die jeweils zu beladenen Flächen haben meist rechteckige Grundform und sind aus Raumersparnisgründen nebeneinander angeordnet. In Betracht kommen hierfür insbesondere Förderbänder oder Verarbeitungsmaschinen, welche das Fördergut aufnehmen oder ausgeben.

Der erfindungsgemäße Roboter ist damit den Palettierungsverhältnissen durch seine Kinematik besonders angepaßt. Insbesondere auch durch die längsverschiebliche Anordnung des drehbaren Greifarms an der Traverse, der die Bedienung eines ausgedehnten Bereichs ermöglicht. Der gesamte Bereich unterhalb der Traverse steht zum Zugriff zur Verfügung. Die Länge des Arms braucht nicht verändert zu werden, da jeder Punkt innerhalb eines ovalen Zugriffsbereichs durch unterschiedliche Winkelstellung des Arms zur Traverse in Kombination mit erreicht werden kann. Innerhalb des Zugriffsbereichs sind keine Zonen ausgespart, die durch den Roboter selbst verstellt werden oder vom Greifarm nicht erreicht werden könnten. Wesentlich ist auch, daß alle Punkte des Zugriffsbereichs (mit Ausnahme des äußersten Randbereichs) von jeder Richtung her erreicht werden können. Damit ist der Vorteil verbunden, daß bei der Beschickung oder der Entnahme von Stapeln keinerlei Einschränkungen bestehen. Insbesondere unter beengten Bedingungen oder bei besonderen Anforderungen an die Einlege- oder Entnahmerichtung des Transportgutes können vielfältige Anforderungen erfüllt werden.

Die Be- und Entladestationen können beliebig benachbart angeordnet sein, so daß sich die Transportzeiten wegen der verkürzten Wege weiter stark verringert und somit die Effektivität des Transportsystems gegenüber vergleichbaren Systemen vergrößert wird.

Die erfindungsgemäße Vorrichtung eignet sich insbesondere für den Transport von Druckerzeugnissen als Sammelhefter oder in Form von losen oder miteinander verbundenen Stapeln. Im Bereich Zeitschriftenherstellung lassen sich sämtliche Transportvorgänge im Bereich der Druckmaschinen und des Versandes automatisieren. Dazu gehören insbesondere die Zusammenführung einzelner separat hergestellter Heftteile und die Zusammenstellung von Versandpartien. Bei der Zusammenführung von zeitlich zurückliegend gedruckten Teilen mit aktuell einzufügenden Teilen läßt sich eine zeitliche "Pufferung" innerhalb der Produktion durch Beschickung eines Lagerbereiches erzielen.

Insbesondere sind folgende vorteilhafte Weiterbildungen günstig:

Ein noch vergrößerter Arbeitsbereich läßt sich erzielen, wenn die Traverse eine horizontal verfahrbare Lagerung aufweist.

Weiterhin werden bei einer weiteren erfindungsgemäßen Ausführungsform die Zugriffszeiten insbesondere dadurch verkürzt, wenn die Drehwinkel von Greifarm und/oder Greifvorrichtung mehr als 360° betragen, da in diesem Fall aufeinanderfolgende Transportbewegungen meist ohne vollständige Rückdrehung ausgeführt werden können, wie es sonst beim vorzeitigen Erreichen eines Endanschlags der Fall wäre.

Durch das Vorsehen von mehreren parallelen Fahrbahnen an einer Traverse lassen sich durch Verwendung mehrerer koordiniert gesteuerter Greifarme die Umschlagzeiten weiter verkürzen. Hierbei ist bevorzugt eine Steuerung vorgesehen, welche eine koinzidierende Überschneidung der Greifbereiche gegeneinander sperrt.

In einer bevorzugten Ausführung für die Stapelung von Druckerzeugnispacken durch den Palettierungsroboter werden die durch die Stapelung bedingten Höhenunterschiede durch heb- bzw. senkbare Plattformen, wie Hubtische, ausgeglichen, so daß eine Teilung der Bewegungsrichtungen, also horizontal und vertikale Bewegungen, zwischen dem Hubtisch und dem Roboter bei der Palettierung bzw. Depalettierung erfolgt. Während der Palettierungsroboter fortlaufend nach einem vorgegebenen Schema palettiert, senkt sich der Hubtisch um die Höhe eines Stapels ab, sobald eine Lage Stapel palettiert wurde. Der Roboter kann dadurch mit minimierten Bewegungen die Palettierung schnellstens ausführen. Der Depalettierungsvorgang erfolgt dabei in sinngemäß umgekehrter Richtung bzw. Reihenfolge. Der Vorgang vom Ergreifen eines Stapels bis zum Ablegen dauert bei einer durchschnittlichen Winkelbewegung des Greifarms 1,5 sec, bei den bekannten Robotern dagegen 5 sec. Die Zeitersparnis ist durch die Aufgabenteilung der horizontalen und vertikalen Bewegungen auf zwei Vorrichtungen sowie durch die vereinfachte Kinematik ermöglicht worden. Die Steuerung des Palettierungsroboters ist deswegen gegenüber den bekannten Ausführungen erheblich vereinfacht ausgebildet. Der Hubtisch wird jeweils dann abgesenkt, wenn von mit dem Hubtisch und den zu stapelnden Packen im Wirkzusammenhang stehenden Lichtschranken ein Signal an die Steuerung weitergeben wird.

Als günstig erweist sich insbesondere, daß die bewegten Teile des Roboters aus Aluminium bestehen und in Leichtbauweise ausgebildet sind. Dadurch reduziert sich die zu bewegende Masse und damit auch die Störanfälligkeit des Roboters.

Die Steuerung des erfindungsgemäßen Palettierroboters wird dadurch begünstigt, daß ein Pufferspeicher nach Art eines Schieberegisters vorgesehen ist, in dessen Speicherplätzen aufeinanderfolgend auszuführende Bewegungen gespeichert sind und bei einer koinzidierenden Überschneidung der Greifbereiche und Sperrung eines Greifarms, dem gesperrten Greifarm eine in der Folge erst später zu erledigende Aufgabe im Pufferspeicher in der Reihenfolge vorangestellt wird bzw. vorzeitig zur Ausführung gelangt. Hierbei sind bevorzugt in den einzelnen Speicherplätzen zusätzliche Kennzeichnungen hinsichtlich der Zeitdauer und/oder der Zuordnung der auszuführenden Bewegungen zu einzelnen Greifarmen vorgesehen.

Durch eine Steuervorrichtung, welche einen Speicher für verschiedene vorgegebene Palettierungsschemata enthält, lassen sich unterschiedlichste Transportvorgänge nach einem jeweils vorgegebenen Schema schnell und flexibel abwickeln.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a ein erstes Ausführungsbeispiel der Erfindung in Seitenansicht,

Figur 1b das Ausführungsbeispiel gemäß Figur 1a in Draufsicht,

Figur 2 einen Greifer als Detail des Ausführungsbeispiels gemäß Figuren 1a und 1b in perspektivischer Darstellung,

Figur 3a Zwischenlagen für zu palettierendes Gut als Detail im Schnitt,

Figur 3b die Zwischenlagen gemäß Figur 3a in der Draufsicht,

Figur 4a den Greiferbereich des Ausführungsbeispiels gemäß Figur 1a in der Grundposition,

Figur 4b den Greiferbereich gemäß Figur 4a in einer geneigten Position zur Aufnahme oder zum Ablegen eines Stapels sowie

Figur 5 ein Blockschaltbild einer Steuerschaltung für das Ausführungsbeispiel gemäß Figur 1a.

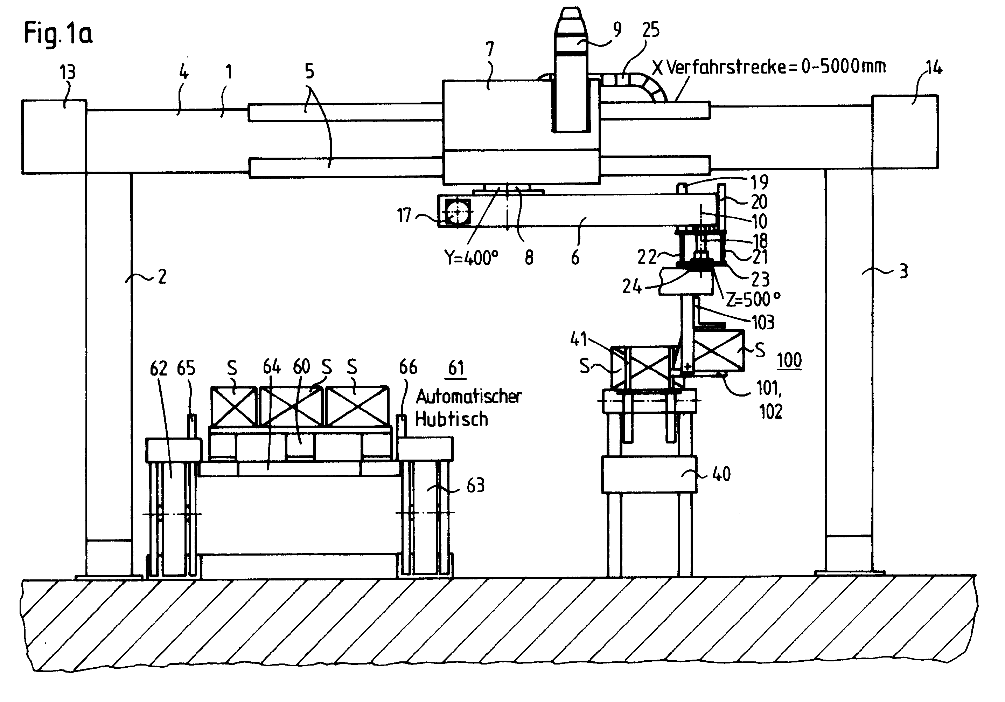

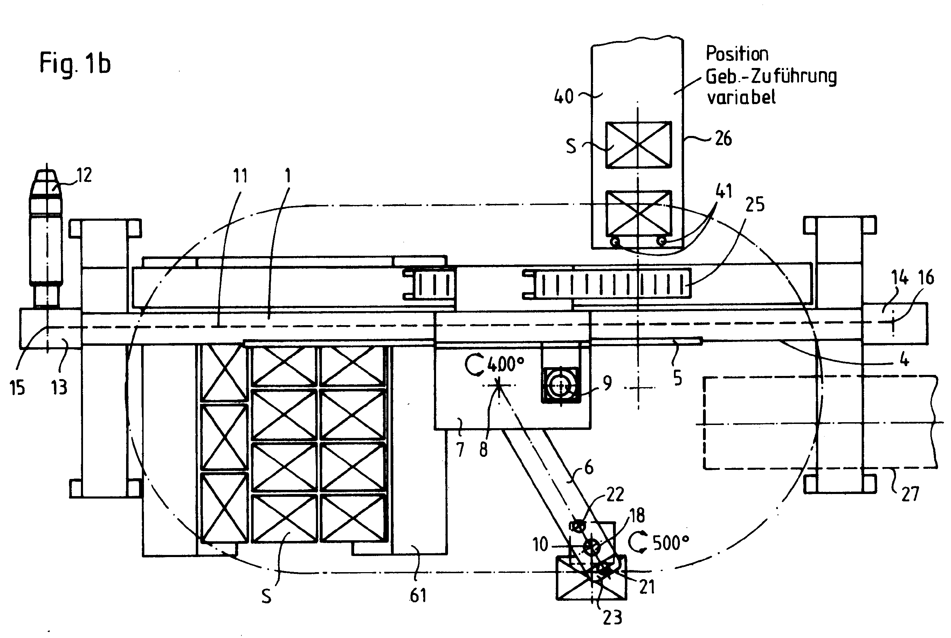

Bei dem in den Figuren 1a und b in der Seitenansicht bzw. in der Draufsicht dargestellten bevorzugten Ausführungsbeispiel der Erfindung erstreckt sich eine Traverse 1 über den Arbeitsbereich. An ihren Enden ist sie mit zwei Auflagern 2 und 3 in Form von Ständern verbunden, wobei die Auflager 2 und 3 mindestens die Höhe des notwendigen Bearbeitungsraumes aufweisen.

An einer Seite 4 der Traverse 1 ist eine Fahrbahn 5 angeordnet, die die Länge des seitlichen Verfahrweges eines Arms 6 aufweist. Mittels einer Führungsvorrichtung 7 ist der an einer Drehvorrichtung 8, mit einem möglichen Drehwinkel von 400°, aufgehängte Arm 6 in Richtung der Traverse 1 verschieblich gelagert. Der Antrieb der Drehvorrichtung 8 erfolgt elektrisch durch einen Motor 9, der mit einem Gehäuse der Führungsvorrichtung 7 verschraubt ist.

Den Antrieb für eine Verschiebebewegung in Richtung der Traverse 1 erhält die Führungsvorrichtung 7 über einen in der Zeichnung nicht sichtbaren, aber in Figur 1b strichliniert angedeuten, Zahnriemen 11 von einem Motor 12. Der Zahnriemen 11, der innerhalb der Traverse 1 verläuft, spannt sich von dem einen Antriebsgehäuse 13, an dem der Motor 12 angeordnet ist, bis zu einem Antriebsgehäuse 14, das am gegenüberliegenden Ende der Traverse 1 mit dieser verbunden ist. Der Zahnriemen 11 ist über ein Zahnrad 15 beim Motor 12 zur Führungsvorrichtung 7 geführt. Hier ist der Zahnriemen 11 mit der Führungsvorrichtung 7 derart verbunden, daß sich mit dem Bewegen des Zahnriemens 11 die Führungsvorrichtung 7 gleichzeitig mitbewegt. Im Anschluß an die Führungsvorrichtung 7 verläuft der Zahnriemen 11 über eine hier nicht sichtbare Umlenkrolle 16, die im Antriebsgehäuse 14 gelagert ist, zurück zum Motor 12.

Der Arm 6 ist an seinem freien Ende mit einer Drehvorrichtung 10 versehen, an der eine Greifvorrichtung 100 angebracht ist. Der Antrieb der Drehvorrichtung 10 erfolgt mit einem Motor 17, der an der der Drehvorrichtung 10 gegenüberliegenden Seite des Arms angebracht ist, wobei die Kraftübertragung von dem Motor 17 auf die Drehvorrichtung 10 über einen weiteren Zahnriemen erfolgt. Die Kraft wird dann weiter von der Drehvorrichtung 10 über eine Welle 18 auf die Greifvorrichtung 100 übertragen, wobei die Welle 18 um einen vorgegebenen Hub in senkrechter Richtung verschiebbar ist.

In der Nachbarschaft zur Welle 18 sind zwei den zwei Druckluftzylindern 19 und 20 zugeordnete Hubstangen 21 und 22 angeordnet. Die Druckluftzylinder 19 und 20 sind in paralleler Anordnung mit dem freien Ende des Armes 6 verbunden und die Hubstangen sind in Richtung der Greifvorrichtung 100 verfahrbar. An dem den Druckzylindern 19 und 20 gegenüberliegenden Enden der Hubstangen 21 und 22 ist eine Hubplatte 23 angeordnet, die mit einer Anschlußvorrichtung 24 der Greifvorrichtung 100 mit der Welle 18 verbunden ist. Der maximale Hub ist durch die Differenz der eingerückten Stellung und der maximal ausfahrbaren Stellung der Hubstangen 19 und 20 vorgegeben.

Die Führungsvorrichtung 7, der Motor 9 und der Motor 17, sowie die Bewegungsvorrichtungen für den Greifer 100 sind durch einen Kabelstrang mit der Steuervorrichtung verknüpft, wobei der Kabelstrang in der Traverse in einer gegliederten Leiste 25 geführt ist.

Durch die wenigen Gelenke im Palettierroboter ist die Palettierungsgeschwindigkeit unter Wahrung eines großen Zugriffsbereichs hoch. Der Arm 6 ist starr ausgebildet und besteht bevorzugt aus einem kastenförmigen Alumiumprofil.

Die um eine vertikale Achse rotierende einzige Drehvorrichtung 8 des starren Arms 6 ermöglicht zusammen mit der horizontalen Führungsvorrichtung 7 des drehgelagerten Endes des Arms 6 ein schnelles und präzises Bewegen des Arms 6 mit der Greifvorrichtung 100 in einem großen Arbeitsbereich. Zum Ausgleich der unterschiedlichen, durch Verwerfungen oder durch Toleranzen der Stapelhöhen enstehenden Ablage- bzw. Aufnahmeflächen beim Palettieren bzw. Depalettieren, ist die Greifvorrichtung 100 um den vertikalen Hub von wenigen Zentimetern verschieblich durch die vertikal gerichteten Hubstangen 21 und 22 ausgebildet. Die Hubstangen 21 und 22 bilden eine einfache vertikale Hilfsführung der Greifvorrichtung 100, wobei die vertikale Ausgleichsbewegung der Greifvorrichtung 100 die hohe Palettierungsgeschwindigkeit, aufgrund des geringen Bewegungsumfangs, nicht beeinträchtigt.

In den Figuren 1a und b ist ein Längsförderer 40 dargestellt, der einen Druckerzeugnisstapel S antransportiert und der an seinem Ende eine Anschlagvorrichtung 41 aufweist. Er ist im Schwenkbereich des Arms 6 angeordnet. Vom Ende des Längsförderers 40 wird der Stapel S von der Greifvorrichtung 100 aufgenommen. Dabei fahren die unteren ersten Zinken 101 und 102 in die in dem Längsförderer vorgesehenen Ausnehmungen unter dem an der Anschlagvorrichtung angeordneten Stapel S. Die unteren beiden ersten Zinken 101 und 102 drücken gleichzeitig mit dem zweiten Zinken 103, der in Form eines Preßbackens ausgebildet ist, den Stapel S zusammen. Anschließend verfahren die Druckzylinder 19 und 20 die Hubstangen 21 und 22 soweit nach oben, bis die Höhe der Anschlagvorrichtung 41 überwunden ist. Bei dem Stapel S kann es sich bei dem dargestellten Ausführungsbeispiel um lose oder verbundene Stapel von Zeitschriften oder um Sammelhefter handeln.

Der Stapel wird nun mit einer koordinierten Bewegung der Führungsvorrichtung 7, der Drehvorrichtung 8, des Arms 6, der Drehvorrichtung 10, der Greifvorrichtung 100 und der Hubstangen 21 und 22 in Richtung auf eine Palette 60 bewegt, die auf einem vertikal um die gewünschte Stapelhöhe verfahrbaren Hubtisch 61 angeordnet ist. Der Hubtisch 61 ist dabei innerhalb des maximalen Verfahr- und/oder Drehbereiches des Palettieroboters angeordnet.

Der Hubtisch 61 weist eine zwischen Ständern 62 und 63 vertikal bewegliche Platte 64 auf, die eine Palette 60 trägt, auf der sich wiederum Stapel S befinden. Mit den Ständern verbunden ist ein Lichtsender 65 und ein Lichtempfänger 66 einer Lichtschranke, deren Lichtstrahl den Hubtisch in der Höhe des Zugriffsbereichs der unteren, ersten Zinken des Greifers überquert. Der Lichtstrahl ist zwischen mehreren Umlenkpunkten gespiegelt bzw. so geführt, daß er den gesamten Bereich der Palette mit einem maximalen Strahlabstand erfaßt, der kleiner ist als die kleinste Querabmessung eines zu erfassenden Stapels. Ist eine Lage abgeräumt, d.h. wenn alle Fördervorgänge für ein Palettierungsmuster ausgeführt sind, hebt sich der Tisch durch das von der Lichtschranke abgegebene Signal wegen des nun freien Lichtwegs um eine Stapelhöhe. Beim Palettieren senkt sich nach dem Beladen einer Ebene entsprechend dem Palettierungsmuster die Platte 64 bis der Lichtweg wieder frei ist.

Wie in Figur 1b dargestellt ist, sind zwei mögliche Positionen 26 und 27 des Längsförderers vorgegeben. Die Palettierung erfolgt nach einem vorgegebenen Schema, das der Roboter nacheinander abfährt und die Stapel an den vorgegebenen Plätzen ablegt, wobei der Hubtisch 61 immer dann nach unten, um die Höhe eines Stapels S, verfährt, wenn eine Lage mit Stapeln S auf die Palette 60 aufgebracht wurde. Der Vorgang wiederholt sich so oft, bis eine gewünschte Höhe der Palettenbeladung erreicht ist. Anschließend senkt sich der Hubtisch vollends ab und setzt die Palette auf ein hier nicht eingezeichnetes FTS (Fahrerloses Transport System) ab. Das FTS fährt die Palette aus dem Bearbeitungsraum heraus und ein weiteres FTS fährt eine unbeladene Palette 60 in den Hubtisch 61 hinein und dieser Transportvorgang als Teil der sogenannten "Palettierung" erfolgt von Neuem.

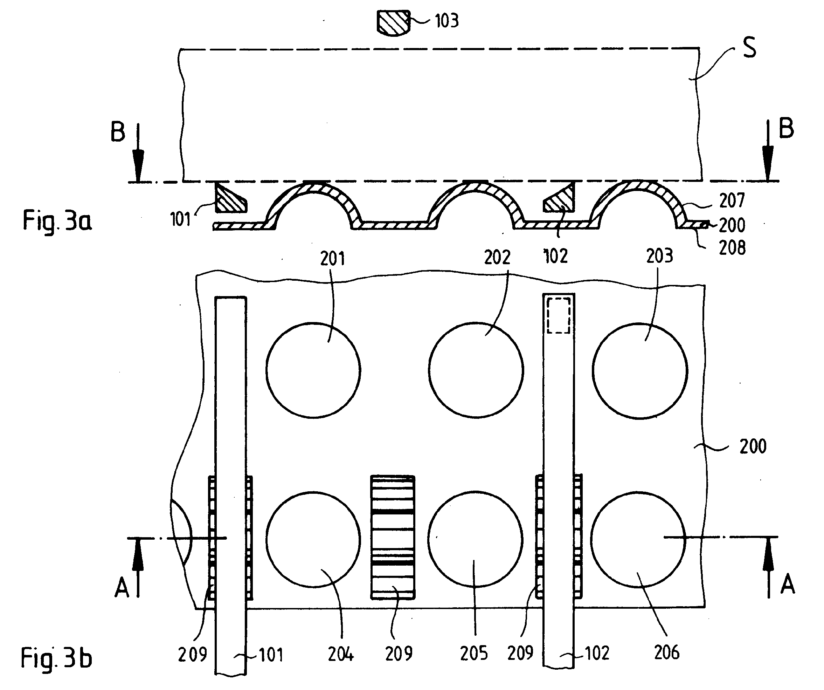

Ebenso kann der Ablauf auch umgekehrt, im Zuge einer Depalettierung erfolgen, so daß die Stapel S von der Palette 60 auf den Längsförderer 40 bewegt werden. Voraussetzung für das Ergreifen von gestapeltem Gut sind aber Zwischenlagen 200, die anhand von Figur 3a und b beschrieben sind.

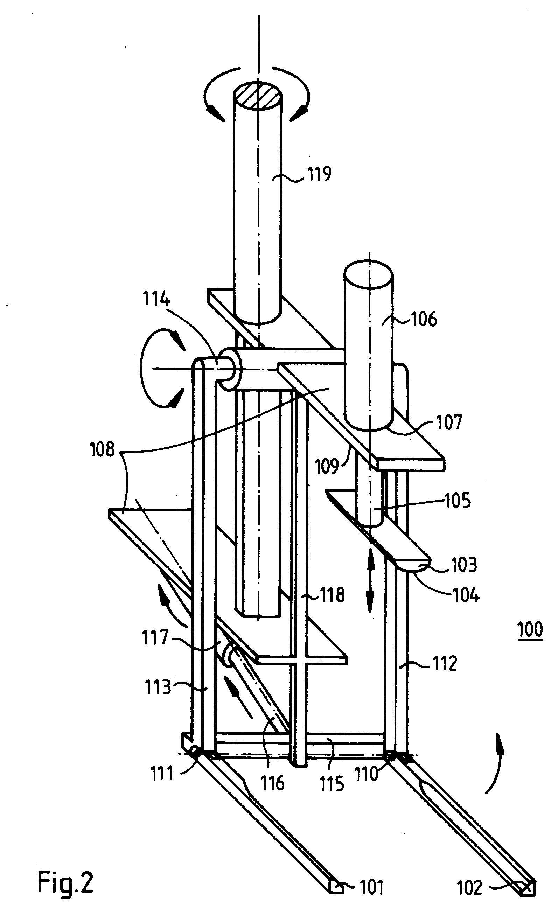

Bei der in Figur 2 perspektivisch dargestellten Greifvorrichtung des bevorzugten Ausführungsbeispiels sind zwei erste Zinken 101 und 102 in einem festen Abstand angeordnet und ein ein Gegenelement bildender zweiter Zinken 103, in Bezug auf die gegenüberliegenden ersten Zinken 101 und 102, in einer Bewegungsebenbene verschieblich, die mittig zwischen den beiden ersten Zinken 101 und 102 liegt.

Der zweite Zinken 103 ist in Form eines Preßbackens derart ausgebildet, daß seine Auflagefläche 104 eine konvexe Wölbung in Richtung der ersten Zinken 101 und 102 aufweist. Der zweite Zinken 103 ist an der der Auflagefläche gegenüberliegenden Seite mit einer Zug/Druckstange 105 verbunden, die in einem Druckzylinder 106 verschieblich endet. Der Druckzylinder 106 ist in einer Aussparung 107 im Greifergehäuse 108 angeordnet und mit einem Greifergehäuse 108 derart verbunden, daß seine hier nicht sichtbare Stirnfläche mit der in Richtung auf den zweiten Zinken 103 zeigenden Fläche 109 des Greifergehäuses bündig abschließt.

Die beiden ersten Zinken 101 und 102 sind in Form von Greiferleisten ausgebildet, wobei sie seitlich an einander zugewandten Flächen in ihrem oberen Bereich abgeschrägt sind. Der Neigungswinkel der Abschrägung ist in Anpassung an das zu palettierende Gut unterschiedlich ausgebildet. Die Zinken 101 und 102 sind beginnend beim Scharniergelenk in Richtung auf das freie Ende und von der Greiferleistenfläche, die zum zweiten Zinken zeigt, in Richtung auf die gegenüberliegende Greiferleistenfläche, abgeschrägt. Die beiden ersten Zinken 101 und 102 sind mit Scharniergelenken 110 und 111 mit den Enden von parallel zueinander angeordneten Gabelstangen 112 und 113 verbunden. Die Scharniergelenke 110 und 111 sind eingeschränkt klappbar ausgebildet, so daß die beiden ersten Zinken 101 und 102 nur in Richtung des zweiten Zinkens 103 klappbar sind. Die Gabelstangen 112 und 113 sind an ihrem anderen Ende durch eine quer zu den Gabelstangen 112 und 113 verlaufende Lagerstange 114 miteinander verbunden, die in dem Greifergehäuse 108 scharnierartig gelagert ist. Auf der den ersten Zinken 101 und 102 gegenüberliegenden Seite, in Fortsetzung der Scharniergelenke 110 und 111 der beiden ersten Zinken 101 und 102, ist eine Querstrebe 115 mit den Gabelstangen 112 und 113 verbunden. In der Mitte der Querstrebe 115 ist an einem drehbaren, hier nicht sichtbaren Gelenk eine Hubstange 116 angeordnet. Sie verläuft in Richtung auf einen am Greifergehäuse 108 angeordneten Druckzylinder 117 und endet darin verschieblich. Der Druckzylinder 117 ist an einem hier nicht sichtbaren Gelenk drehbar am Greifergehäuse 108 aufgehängt.

Zwischen den beiden Gabelstangen 112 und 113 befindet sich ein Abstreifer 118, der parallel zur Bewegungsachse des zweiten Zinken 103 angeordnet ist und senkrecht zur Ebene, die die beiden ersten Zinken 101 und 102 in nicht gekipptem Zustand einnehmen, steht.

Das Greifergehäuse 108 hat eine Anschlußstange 119 an der eine in der Zeichnung verdeckte Kupplung für einen Palettierroboter angebracht ist. Unterhalb der Kupplung, in Richtung auf das Greifergehäuse 108, weist die Anschlußstange 119 eine hier nicht sichtbare Drehvorrichtung in Bezug auf eine vertikale Achse, die mittig in der Anschlußstange angeordnet ist, auf. Ebenso unterhalb der Kupplung weist die Anschlußstange 119 eine hier nicht sichtbare Klappvorrichtung in Bezug auf eine horizontale Achse unterhalb der Drehvorrichtung auf. Dadurch kann die Greifvorrichtung um mindestens 360° gedreht und in, gegen und seitlich zur Richtung der freien Enden der Zinken 101 bis 103 geklappt werden. Die Anschlußstange 119 ist auf der Seite des Greifergehäuses angeordnet, an der sich auch der Druckzylinder 106 befindet und liegt in der Ebene, die der zweite Zinken 103 bei seiner Bewegung durchläuft.

In der Darstellung gemäß Figur 2 sind die Bewegungsachsen des Greifers erkennbar. Dabei führt das Greifen oder Lösen des Greifers und damit das Aufnehmen und Ablegen von Stapeln zu folgendem Bewegungsablauf. Der Greifer wird vom Roboter derart zu dem zu greifenden Stapel gefahren, daß die beiden ersten Greiferzinken 101 und 102 unter dem Stapel und der Greiferzinken 103 über dem Stapel angeordnet sind. Der Stapel liegt dann auch beim Abstreifer 118 an und gleichzeitig mittig in Bezug auf die beiden ersten Zinken 101 und 102 und dem zweiten Zinken 103.

Anschließend wird die Greifvorrichtung insgesamt angehoben und gleichzeitig der zweite Zinken mit der doppelten Geschwindigkeit des Hubs der Greifvorrichtung in Richtung der beiden ersten Zinken 101 und 102 gedrückt. Dadurch ergreifen die Zinken 101 bis 103 gleichzeitig den Stapel. Mit Erreichen eines vorgegebenen Greifdrucks und einer vorgegebenen den Stapel stabilisierenden Wölbung wird die Greifvorrichtung durch einen Roboter und/oder eine Fördervorrichtung an den Ablegeort gefahren.

Die Greifvorrichtung wird nun durch das in der Zeichnung nicht sichtbare Drehgelenk an der Anschlußstange 119 in die gewünschte Ablegerichtung gedreht und durch eine ebenfalls über die Anschlußstange 119 übertragene Senkbewegung auf eine vorgegebene Ablagehöhe, die sich unmittelbar über der Zwischenlage 200 befindet, gefahren. Die Gabelstangen 112 und 113 werden nun über die Querstange 115 und über die Hubstange 116, die in den Druckzylinder einfährt, vom Stapel weg in die entgegengesetzte Richtung um die Achse der Lagerstange 114 gekippt. Dadurch kann die Stapelunter seite sich vollständig am Stapelort absetzen. Um beim Zurückkippen der Gabelstangen 112 und 113 ein Beschädigen der Zwischenlagen durch die beiden ersten Greiferzinken 101 und 102 zu verhindern, klappen die beiden ersten Greiferzinken 101 und 102 um die Drehachse, die durch die scharnierartigen Gelenke 110 und 111 geht, aufwärts.

Die Greifvorrichtung kann den Stapel auch umgekehrt aufnehmen, so daß die Greifvorrichtung um eine Achse so gedreht ist, daß die beiden ersten Zinken 101 und 102 über und der zweite Zinken unter dem Stapel angeordnet ist.

In den Figuren 3a und b ist in einem Querschnitt A-A und einer Draufsicht eine Zwischenlage des erfindungsgemäßen Ausführungsbeispiels dargestellt. Die Zwischenlage 200 erstreckt sich jeweils über eine gesamte Palette und bildet eine Unterlage, welche einen Zugriff des Greifers zum Depalettieren der einzelnen Stapel ermöglicht. Nach dem Abräumen einer gesamten Lage wird die Zwischenlage entfernt. Sie ist wiederverwendbar und weist insbesondere die für den Zugriff des Greifers notwendigen Informationen, insbesondere über das Palettierungsmuster auf, so daß eine Depalettierung automatisch erfolgen kann, wenn die betreffende Information gelesen wurde, ohne daß der Roboter die Positionen der einzelnen Stapel erkennen muß. Die Codierungen der Zwischenlagen geben andererseits auch bei der Palettierung die Palettierungsmuster vor, so daß auch hier keine weiteren Steuermaßnahmen erforderlich sind. Für jedes Palettierungsmuster ist lediglich eine besondere, die entsprechenden Codierungen aufweisende, Sorte von Zwischenlagen erforderlich.

Die Zwischenlage weist Erhebungen 201 bis 206 auf, wobei die Erhebungen 201 bis 206 in Form von Noppen ausgebildet sind, in deren Zwischenräume die Greiferzinken von den vier Seitenkanten her einfahren können. Der Abstand und die Höhe der Noppen ist auf die Greiferzinken abgestimmt. Den Noppen 201 bis 206 an der Oberseite 207 sind Vertiefungen der Unterseite 208 zugeordnet, so daß die Zwischenlagen stapelbar und ineinanderfügbar sind. Die Oberfläche ist glatt ausgebildet, so daß die Zwischenlagen mittels Sauger transportierbar sind. An der Oberseite 207 der Zwischenlagen 200 sind Strichcodierungen 209 mittig zwischen den Noppen angeordnet sind. Die Codierungen enthalten Informationen über die Position der Greifvorrichtung 100 und den Palettier- und Depalettierungsablauf und werden von einer Lesevorrichtung, die unterhalb der Greiferleiste 102 angeordnet ist, beim Einfahren erfaßt. Bei in Richtung der Greiferbewegung lesbaren Strichcodes sind zusätzliche Antriebsmittel zur Erzeugung der Relativbewegung zwischen Codierung und Abtastvorrichtung entbehrlich.

Für den Depalettiervorgang von Stapeln sind die Zwischenlagen Voraussetzung. Die Greifvorrichtung 100 wird mit seinen Zinken 101 bis 103 derart an den Stapel gefahren, daß die beiden ersten Zinken 101 und 102 unter dem Stapel und jeweils mittig zwischen den Noppen angeordnet sind und der zweite Zinken 103 sich über dem Stapel befindet. Gleichzeitig befindet sich der Stapel mittig zwischen den beiden ersten Zinken 101 und 102 und dem zweiten Zinken 103. Die ersten Zinken untergreifen den zu depalettierenden Stapel S und können sich aus der Zwischenlage frei nach oben entfernen. Die Zwischenlage verbleibt auf der Unterlage und wird nach dem Abräumen einer Stapellage entfernt. (Der Transportvorgang insgesamt verläuft dem anhand von Figur 1 beschriebenen Palettiervorgang entsprechend, beginnend mit der Stapelaufnahme bis zur Stapelablage.)

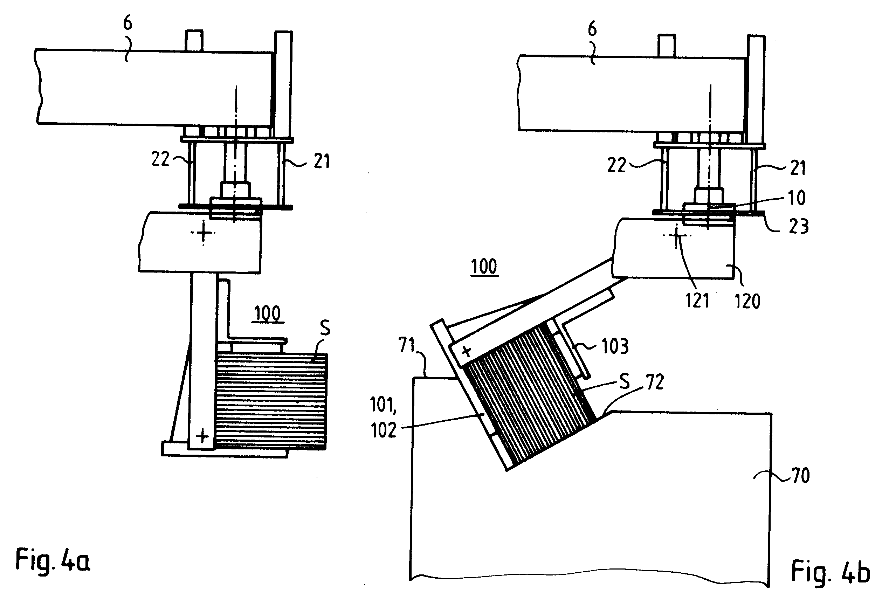

Der Palettier- und der Depalettiervorgang wurde anhand von Figur 1 zwischen einem Längsförderer 40 und einer Palette 60 dargestellt. Der Palettierroboter kann aber auch weitere Stapelaufnahme- und Stapelablagepositionen von unterschiedlichen Verarbeitungsmaschinen bedienen. Ferner kann er in die unterschiedlichen Fertigungs-, Binde- und Versandstraßen integriert werden. Eine derartige bevorzugte Möglichkeit soll nachstehend anhand der Figuren 4a und b näher erläutert werden. Der erfindungsgemäße Palettierroboter beschickt bzw. entsorgt hier einen schematisch dargestellten Sammelhefter 70. Der Stapel wird von einer hier nicht sichtbaren Palette 60, die Zwischenlagen 200 zwischen den Stapellagen aufweist, in der anhand von Figur 1, 2 und 3 beschriebenen Art der Stapelaufnahme von dem Greiferzinken 101 bis 103 aufgenommen und gemäß Figur 4a in einer koordinierten Bewegung der Führungsvorrichtung 7, Drehvorrichtung 8, des Arms 6 und der Drehvorrichtung 10 zum Sammelhefter 70 gefahren.

Die Stapel sind im Sammelhefter in einer gegenüber der Horizontalen geneigten Position angeordnet worden. Die Hubstangen 21 und 22 verfahren die Greifvorrichtung 100, um den Betrag den die Sammelhefteroberseite 71 höher liegt als die Stapellagenoberseite auf der Palette 60, in Richtung Hubplatte 23. Die Greifvorrichtung 100 ist in einer Klappvorrichtung 120 gelagert, so daß die Greifvorrichtung 100 um eine horizontal verlaufende Achse 121 schwenkbar ist. Die Greifvorrichtung 100 wird gleichzeitig mit der Hubbewegung der Hubstangen 21 und 22 um die horizontal verlaufende Achse 121 in Richtung der den freien Enden der Zinken gegenüberliegenden Seiten in den Neigungswinkel der Ablage gedreht. Anschließend senken die Hubstangen 21 und 22 die Greifvorrichtung 100 in Richtung auf den Sammelhefter soweit ab, bis der Stapel auf der geneigten Sammelhefteroberseite 72 aufliegt. Dann lösen sich die Greiferzinken 101 bis 103 in der anhand von Figur 1 beschriebenen Art der Stapelablage.

Die in den Figuren 4a und b schematisch dargestellte Sammelhefter bildet lediglich ein Beispiel eines Ablage- oder Aufnahmeorts für zu transportierende Stapel. Die Zufuhr in die oder die Abfuhr aus der dargestellten geneigten Position kann bevorzugt auch in aufgefächerter Form erfolgen. Der betreffende Ablage- oder Aufnahmeort wird bevorzugt auch durch einen sogenannten Kreuzleger oder eine Anpreßstation gebildet.

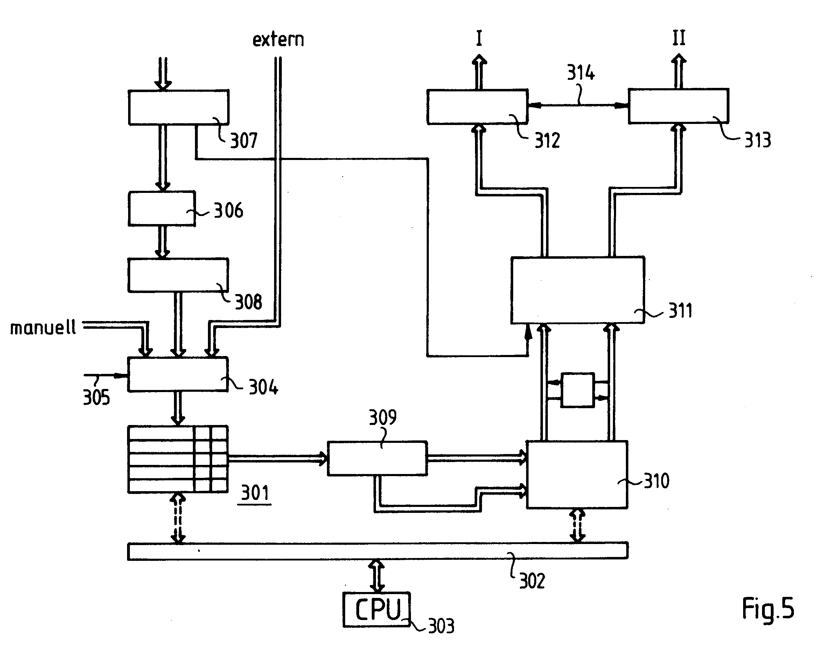

In Figur 5 ist die Steuerung des erfindungsgemäßen Palettierroboters im Blockschaltbild wiedergegeben.

In einem Programmspeicher 301 sind Anweisungen für vollständige Palettierungs- bzw. Depalettierungsvorgänge als Folge von Transportbefehlen abgespeichert. Jeder anwählbare Speicherbereich enthält eine Folge von Transportbefehlen, die bei Anwahl des entsprechenden Speicherbereichs der Reihe nach abgearbeitet werden. Diese Befehle enthalten zugeordnete Informationen, die mit der Auswahl der Befehle zum Zugriff freigegeben werden. Diese Informationen betreffen die Ausführungszeit des betreffenden Transportbefehls und bei Systemen, bei denen mehrere Greiferarme zur Ausführung desselben Transportauftrags herangezogen werden können, eine Zuordnungskennung, welche den betreffenden Transportbefehl definitiv einem Greiferarm zuweist, oder die Ausführung mehreren oder allen Greiferarmen freistellt, so daß durch Aufgabentausch eine Geschwindigkeitsoptimierung erzielbar ist. Die einzelnen Bereiche für die Befehlssequenzen sind im Blockbild des Speichers 301 symbolisch durch Kästchen dargestellt, wobei jeder der vertikal übereinander als Rechteck dargestellten Befehlssequenz in horizontaler Folge die zugeordneten Informationen (kleine Quadrate) zugefügt sind. Jede für sich adressierbare Befehlssequenz besteht aber physikalisch aus einer Folge von Befehlen, denen die betreffenden Informationen einzeln zugeordnet sind.

Jede Befehlssequenz ist damit auch einem Palettierungsschema zugeordnet, daß durch die Folge der Transportanweisungen Aufschluß gibt über die Verteilung des Ladeguts auf der Palette, sowohl beim Palettieren als auch beim Depalettieren. Auf diese Weise kann - unabhängig von der Größe und Anzahl der zu ladenden Stapel - stets eine gleichmäßige Packung erzielt werden, die insbesondere an die Ränder der Paletten angrenzt, so daß ein stabiler Stapel erzeugt wird. Das entsprechende gilt für die Warenzufuhr- oder Entnahme in Produktions- und Lagerbereichen.

Der Speicher 301 ist in einem Mikroprozessor oder sonstigem Computersystem über einen Bus 302 mit einer CPU 303 verbunden. Durch die CPU werden die nachfolgend zu beschreibenden Datenübertragungen ausgeführt. Die entsprechenden Verbindungswege sind in Figur 5 der Übersichtlichkeit halber direkt dargestellt. Bei einem speicherprogrammierbaren System wird der betreffende Datenaustausch aber ebenfalls durch die CPU 303 über den Bus 302 veranlaßt.

Die Adressierung des Speichers erfolgt über einen Auswahlschalter 304, der mit verschiedenen Eingängen versehen ist, die über ein Betätigungselement 305 manuell wählbar sind. Hierbei ist zunächst eine manuelle Adresseneingabe möglich (linker Eingangskanal), um durch direkte Schaltbetätigung Palettierungsmuster für die Depalettierung oder Palettierung vorzugeben. Über den rechten Eingangskanal ist entsprechend eine Ferneingabe mit Mitteln der Datenfernverarbeitung oder über ein zentrales übergeordnetes System möglich.

Der mittlere Eingangskanal wird gesteuert von einem Codeleser 306 mit einem zugeordneten mit dem Greiferarm oder dessen Zinken verbundenen Abtaster 307, der eine an der Palette oder an einer Zwischenlage vorgesehene Codierung abliest und über einen Code-Adress-Umsetzer 308 zum Entschlüsseln der aufgefundenen Codierungen und Ausgabe der Adresse der zugeordneten Befehlssequenz im Speicher 301 zuführt. Auf diese Weise wird durch Erfassen der Codierung ein entsprechendes Transportschema selbsttätig ausgewählt und über einen Puffer 309 an einen Block 310 zur Wegoptimierung weitergegeben. Die Steuersignale für zwei Greifer gelangen an einen Block "Wegführung" 311, der die einzelnen Transportbefehle in konkrete Steueranweisungen für die Bewegung der Arme und Greiferteile umsetzt. Ein erster Greifer I und ein zweiter Greifer II sind über entsprechende Ansteuerschaltungen 312 und 313 mit der Wegführung 311 verbunden.

Zur Koordinierung und Sicherung der Greiferbewegungen erfolgt zunächst eine Verriegelung 314, welche ein koninzidierendes Überschneiden der Greiferbewegungen sperrt. Ein in den Bewegungsbereich beim Ausführen eines Transportbefehls eindringender zweiter Greifarm wird gesperrt, bis der erste Greifer den Bereich verlassen hat. Mit dieser Sicherheitssteuerung ist eine einfache Koordinierung der Bewegungen mehrerer Greifer möglich. Um aber auch eine zeitliche Optimierung zu erzielen, ist eine "Vorausschau" günstig, welche künftige Greiferbewegungen einbezieht. Da die Greiferbewegungen jeweils nach einem vorgegebenen Schema ablaufen, werden bei Ausführung eines aktuellen Transportbefehls die nächsten Befehle in der Reihe bereits in den Puffer 309 geladen, der für jeden Greifer ein separates Schieberegister enthält, dessen einzelne Speicherpositionen separat adressier- und veränderbar sind. Es handelt sich also um ein Schieberegister, dessen Eigenschaften über diejenigen kommerziell in integrierter Form erhältlicher entsprechender Register hinausgeht und deshalb in speicherprogrammierter Form realisiert ist.

Unter Berücksichtigung der zu den einzelnen Transportbefehlen gehörigen Verarbeitungszeitinformation, wird die Überschneidung bei künftigen Transportbefehlen errechnet und bei einer festgestellten Überschneidung ein späterer Befehl vorgezogen, bei dem keine Überschneidung stattfindet. Hierzu ist noch eine weitere bei einem Transportbefehl abgespeicherte Zusatzinformation auszuwerten, welche besagt, um wie viele Schritte ein betreffender Transportbefehl maximal vorgezogen werden kann, um ausführbar zu sein. Hierbei können aber auch weitere Bedingungen festgehalten sein, die für die Bearbeitung eine Rolle spielen können. In der Praxis wird bei der Palettierung oder Depalettierung ein Transportbefehl ohne weiteres vorgezogen werden können, der einen Stapel betrifft, der in der gerade abzuarbeitenden Reihe gelegen ist. Bei der koordinierten Ausführung von Transportaufgaben mit zwei oder mehreren Greiferarmen können dabei Aufgaben des einen Armes an den anderen übertragen werden, um im Rahmen der Optimierung auftretende Zeitbegünstigungen des einen oder des anderen Arms ausgleichen zu können. Hierzu werden diejenigen Hilfsinformationen ausgewertet, welche die Zuordnung der Ausführung von Transportbefehlen durch den einen oder den anderen Arm betreffen.

Bezüglich weiterer Einzelheiten wird auf zwei gleichzeitig eingereichte, Teile desselben Gegenstands betreffende Patentanmeldungen derselben Anmelderin verwiesen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Palettierroboter zum Versetzen von stapelbaren Gegenständen, insbesondere von in Stapeln angeordneten Druckerzeugnissen, mit einer an einem um eine vertikale Achse drehbar angetriebenen Arm angeordneten Greifvorrichtung, einer horizontal gerichteten Traverse mit einer Fahrbahn, an der der drehbar gelagerte Arm in Richtung der Traverse verschieblich geführt ist, und eine um eine vertikale Achse drehbare Lagerung der Greifvorrichtung, wobei sich der in horizontaler Richtung erstreckende Teil des Arms unterhalb der Traverse befindet, **dadurch gekennzeichnet,** daß der Arm (6) starr ausgebildet und die Greifvorrichtung (100) in einer im wesentlichen vertikal gerichteten Führung um einen, insbesondere festen, Hub verschieblich gelagert ist.

2. Palettierroboter nach Anspruch 1, **dadurch gekennzeichnet,** daß die Traverse (1) eine horizontal verfahrbare Lagerung aufweist.

3. Palettierroboter nach einem der vorangehenden Ansprüche, **dadurch gekennzeichnet,** daß die Drehwinkel von Greifarm (6) und/oder Greifvorrichtung (100) mehr als 360° betragen.

4. Palettierroboter nach einem der vorangehenden Ansprüche, **dadurch gekennzeichnet,** daß die Traverse (1) zwei Fahrbahnen (5) aufweist und/oder zwei Traversen (1) vorgesehen sind, an der jeweils mindestens ein drehbarer, in Richtung der Traverse (1) verschieblicher Arm (6) vorgesehen ist, wobei eine Steuereinheit für die gemeinsame oder getrennte Stapelaufnahme und/oder Stapelablage durch die an den Armen (6) angeordneten Greifvorrichtungen (100) vorgesehen ist.

5. Palettierroboter nach einem der vorangehenden Ansprüche, **dadurch gekennzeichnet,** daß ein Hubtisch (61) vorgesehen ist, der jeweils um den Betrag einer Stapelhöhe in der Richtung nach unten bzw. oben verfahrbar ist, wenn eine Stapellage abgelegt bzw. entfernt wurde.

6. Palettierroboter nach Anspruch 5, **dadurch gekennzeichnet,** daß die Steuerung beim Entfernen und-/oder Hinzufügen von Stapeln (S) durch eine Lichtschranke (65, 66) kontrolliert erfolgt, wobei beim Entfernen von Stapeln (S) bei freiem Lichtdurchgang ein Anheben des Hubtisches (61) um einen vorbestimmten Betrag erfolgt bzw. beim Hinzufügen von Stapeln (S) nach einem vorgegebenen Schema nach dem Erzeugen einer Lage von der Steuereinrichtung ein Signal zum Absenken des Hubtisches (61) erfolgt, bis von der Lichtschranke (65, 66) ein freien Lichtdurchgang anzeigendes Signal abgegeben wird.

7. Palettierroboter nach Anspruch 6, **dadurch gekennzeichnet,** daß die Lichtschranke (65, 66) mehrere, die Fläche des Hubtisches (61) in einem Abstand, der kleiner ist als die Kantenlänge der kleinsten zu transportierenden Stapel (S) angeordnete Strahlen aufweist, die einer oder mehreren Lichtquellen entstammen und zu einem einzigen oder mehreren mittels einer ODER-Schaltung verknüpften Lichtaufnehmer(n) gelangen.

8. Palettierroboter nach einem der vorangehenden Ansprüche, **dadurch gekennzeichnet,** daß bei mehreren Greifarmen (6) eine Steuerung vorgesehen ist, welche eine koinzidierende Überschneidung der Greifbereiche gegeneinander sperrt.

9. Palettierroboter nach einem der vorangehenden Ansprüche, **dadurch gekennzeichnet,** daß ein Pufferspeicher (301) nach Art eines Schieberegisters vorgesehen ist, in dessen Speicherplätzen aufeinanderfolgend auszuführende Bewegungen gespeichert sind und bei einer koinzidierenden Überschneidung der Greifbereiche und Sperrung eines Greifarms (6), dem gesperrten Greifarm (6) eine in der Folge erst später zu erledigende Aufgabe im Pufferspeicher (301) in der Reihenfolge vorangestellt wird bzw. vorzeitig zur Ausführung gelangt.

10. Palettierroboter nach Anspruch 9, **dadurch gekennzeichnet,** daß in den Speicherplätzen zusätzliche Kennzeichnungen hinsichtlich der Zeitdauer und/oder der Zuordnung der auszuführenden Bewegungen zu einzelnen Greifarmen (6) vorgesehen sind.

11. Palettierroboter nach einem der vorangehenden Ansprüche, **gekennzeichnet durch** eine Steuervorrichtung, welche einen Speicher für vorgegebene Palettierungsschemata enthält.

12. Greifvorrichtung nach einem der vorangehenden Ansprüche, **dadurch gekennzeichnet,** daß der Greifer (100) eine Anschlußvorrichtung (119) in Form einer Schnellkupplung aufweist.

13. Palettierroboter nach einem der vorangehenden Ansprüche, **dadurch gekennzeichnet,** daß der Arm aus einem starren Kastenprofil besteht.

**Claims**

1. Palleting robot for moving stackable objects, particularly printed matter arranged in stacks, having a gripping device arranged on an arm which is rotatably driven about a vertical axis, a horizontally directed cross-bar having a track on which the rotatably mounted arm is guided so as to be movable in the direction of the cross-bar, and a mounting for the gripping device which is rotatable about a vertical axis, that part of the arm which extends horizontally being located below the cross-bar, characterised in that the arm (6) is of rigid construction and the gripping device (100) is mounted in a substantially vertically directed guide so as to be movable, particularly by a fixed amount.

2. Palleting robot according to claim 1, characterised in that the cross-bar (1) has a horizontally movable mounting.

3. Palleting robot according to one of the preceding claims, characterised in that the angles of rotation of the gripper arm (6) and/or gripping device (100) are more than 360°.

4. Palleting robot according to one of the preceding claims, characterised in that the cross-bar (1) has two tracks (5) and/or two cross-bars (1) are provided, on each of which there is at least one rotatable arm (6) which is displaceable in the direction of the cross-bar (1), whilst a control unit is provided for controlling the joint or separate picking up and/or putting down of a stack by means of the gripping devices (100) provided on the arms (6).

5. Palleting robot according to one of the preceding claims, characterised in that a lifting bench (61) is provided which is movable downwards or upwards, by the amount corresponding to the height of a stack, when a stack is put down or removed.

6. Palleting robot according to claim 5, characterised in that the control operation during the removal and/or addition of stacks (S) is monitored by a light beam (65, 66), the lifting bench (61) being raised by a set amount when stacks (S) are removed and the light beam is uninterrupted, or, when stacks (S) are added according to a predetermined plan, after a layer has been produced, the control device generates a signal for lowering the lifting bench (61) until the light beam (65,66) emits a signal which indicates that the light beam is unbroken.

7. Palleting robot according to claim 6, characterised in that the light beam (65,66) has a plurality of beams arranged on the surface of the lifting bench (61) at a spacing which is smaller than the length of the edge of the smallest stack (S) to be transported, these beams coming from one or more light sources and reaching one or more light receivers which are connected by an OR circuit.

8. Palleting robot according to one of the preceding claims, characterised in that, when there are a plurality of gripper arms (6), a control is provided which prevents the gripping areas from coinciding and overlapping with one another.

9. Palleting robot according to one of the preceding claims, characterised in that a buffer memory (301) is provided, in the manner of a shifting register, the storage locations of which store movements which are to be performed successively, and, in the event of an overlap between the gripping areas and the disabling of a gripper arm (6), a task intended to be performed later in the order in the buffer memory (301) is placed before the disabled gripper arm (6) in sequence or is performed early.

10. Palleting robot according to claim 9, characterised in that additional characterisations regarding the duration and/or the assignment of the movements required to be performed to individual gripper arms (6) are provided in the storage locations.

11. Palleting robot according to one of the preceding claims, characterised by a control device which contains a memory for given palleting schemes.

12. Gripping device according to one of the preceding claims, characterised in that the gripper (100) has a connecting device (119) in the form of a high-speed coupling.

13. Palleting robot according to one of the preceding claims, characterised in that the arm consists of a rigid box-shaped section.


**Revendications**

1. Robot de palettisation pour le déplacement ou le placement décalé d'objets empilables, notamment de produits comprimés agencés en piles, comportant un dispositif de préhension agencé sur un bras entraîné en rotation autour d'un axe vertical, une traverse dirigée horizontalement et dotée d'une piste de déplacement sur laquelle le bras monté à rotation est guidé à coulissement dans la direction de la traverse, et, pour le dispositif de préhension, une monture pouvant tourner autour d'un axe vertical, la partie du bras s'étendant en direction horizontale se trouvant en dessous de la traverse, caractérisé par le fait que le bras (6) est rigide et le dispositif de préhension (100) est monté dans un guide dirigé sensiblement verticalement, avec possibilité de translation d'une ampleur notamment fixe.

2. Robot de palettisation selon revendication 1, caractérisé par le fait que la traverse (1) présente une monture déplaçable horizontalement.

3. Robot de palettisation selon l'une des revendications précédentes, caractérisé par le fait que l'angle de rotation du bras de préhension (6) et/ou du dispositif de préhension (100) est supérieur à 360 °.

4. Robot de palettisation selon l'une des revendications précédentes, caractérisé par le fait que la traverse (1) présente deux pistes (5) et/ou qu'il est prévu deux traverses (1) sur laquelle ou sur lesquelles il est prévu au moins un bras tournant (6) déplaçable en translation sur la direction de la traverse (1), une unité de commande étant prévue pour l'empilage conjoint ou séparé et/ou le dépilage par les dispositifs de préhension (100) agencés sur les bras (6).

5. Robot de palettisation selon l'une des revendications précédentes, caractérisé par le fait qu'il est prévu une table élévatrice (61) qui peut être déplacée à chaque fois de la valeur d'une hauteur d'empilage, vers le bas ou vers le haut, lorsqu'une couche d'empilage a été déposée ou, respectivement, enlevée.

6. Robot de palettisation selon revendication 5, caractérisé par le fait que, lors de l'enlèvement et/ou de l'addition de piles (S), la commande s'effectue sous le contrôle d'un barrage photoélectrique (65, 66), une montée de la table élévatrice (61), d'une valeur prédéterminée, ayant lieu lors de l'enlèvenent de piles (S), lorsque le passage de lumière est libre, ou encore lors de l'addition de piles (S) selon un schéma prédéterminé après la production d'une couche, un signal de descente de la table montante (61) étant produit par le dispositif de commande, jusqu'à ce que le barrage photoélectrique (65, 66) fournisse un signal indiquant un libre passage de la lumière.

7. Robot de palettisation selon revendication 6, caractérisé par le fait que le barrage photoélectrique (65, 66) présente plusieurs rayons agencés à l'entour de la surface de la table élévatrice (61), à une distance inférieure à la longueur d'arête de la plus petite pile (S) à transporter, ces rayons provenant d'une ou plusieurs sources lumineuses et allant à un unique capteur de lumière ou à plusieurs capteurs de lumière combinés au moyen d'un circuit OU.

8. Robot de palettisation selon l'une des revendications précédentes, caractérisé par le fait que, dans le cas où il y a plusieurs bras de préhension (6), il est prévu une commande qui interdit l'interférence des domaines de préhension.

9. Robot de palettisation selon l'une des revendications précédentes, caractérisé par le fait qu'il est prévu une mémoire-tampon (301) dans le mode registre à décalage, dans les emplacements de laquelle sont mémorisés des mouvements à exécuter successivement et, dans le cas d'une interférence par coïncidence des domaines de préhension conduisant à l'empêchement d'un bras de préhension (6), une tâche à exécuter seulement plus tard dans la séquence est placée en priorité dans la mémoire-tampon (301), pour le bras empêché (6), ou encore est amenée à être exécutée plus tôt.

10. Robot de palettisation selon revendication 9, caractérisé par le fait que des caractérisations supplémentaires concernant la durée des mouvements à exécuter et/ou l'attribution de ceux-ci aux bras de préhension individuels (6) sont prévues dans des emplacements en mémoire.

11. Robot de palettisation selon l'une des revendications précédentes, caractérisé par un dispositif de commande qui contient une mémoire pour des schémas de palettisation prédéterminés.

12. Dispositif de préhension selon l'une des revendications précédentes, caractérisé par le fait que l'organe de préhension (100) présente un dispositif de raccordement (119) sous la forme d'un accouplement rapide.

13. Robot de palettisation selon l'une des revendications précédentes, caractérisé par le fait que le bras est en un profilé rigide en forme de caisson.

Fig.1a

X Verfahrstrecke = 0-5000mm

Y=400°

Z=500°

61
Automatischer Hubtisch

100

101, 102

EP 0 377 398 B1

Fig. 1b

Position
Geb.-Zuführung
variabel

Fig.2

EP 0 377 398 B1

103

S

B ↓ ↓ B

Fig. 3a

101    207
       200
       208

201    202  102    203

200

Fig. 3b

209  101  204  209  205  209  102  206

A ↑  ↑ A

Fig. 4a

Fig. 4b

EP 0 377 398 B1

16

extern

manuell

I    II

314

312    313

307

306

308

305    304

309

301

311

310

302

CPU
303

Fig.5

EP 0 377 398 B1

17